# EUROPEAN PATENT APPLICATION

(11) **EP 4 626 088 A1**
(43) Date of publication of application: **01.10.2025**
(21) Application number: 25167158.2
(22) Date of filing: 28.03.2025
(51) Int. Cl.: H04W 52/02, H04W 72/0453, H04W 74/0808, H04W 74/0816, H04W 84/12, H04W 4/00, H04W 24/02, H04W 40/00, H04W 84/18

(54) **AP DEVICES AND METHODS FOR SUPPORTING R-TWT LOW LATENCY SERVICE IN WIRELESS MESH NETWORK**

(30) Priority: 29.03.2024 CN 202410383052
(71) Applicant: Nokia Solutions and Networks Oy, 02610 Espoo (FI)
(72) Inventor: CHENG, Gang, Shanghai, 201206 (CN); JIANG, Yi Ming, Shanghai, 200136 (CN); QIAN, Zhi Hong, Shanghai, 201206 (CN); MUTGAN, Orhan Okan, 81541 München (DE)
(74) Representative: DREISS Patentanwälte PartG mbB

(57) **Abstract**

The embodiments of the present disclosure relate to access point (AP) devices and methods for supporting an Restricted Target Wake Time (R-TWT) low-latency service in a wireless mesh network. A first AP device in the wireless mesh network sends a Restricted Target Wake Time (R-TWT) notification message to a second AP device in a wireless mesh network, where the R-TWT notification message at least indicates an R-TWT Service Period (SP) of a terminal having R-TWT membership with the first AP device. The first AP device performs, within the R-TWT SP of the terminal, coordinated channel access with the second AP device for transmission of a low latency service of the terminal.

## Description

### FIELD

Embodiments of the present disclosure generally relate to the field of communications technology, and more specifically, to Access Point (AP) devices and methods for supporting an Restricted Target Wake Time (R-TWT) low latency service in a wireless mesh network, and a computer readable medium.

### BACKGROUND

The Restricted Target Wake Time (R-TWT) mechanism is a new feature in Wi-Fi 7. The R-TWT mechanism allows an Access Point (AP) and a Station (STA) to negotiate a sequence of service periods when the STA is active. This means that the two can be reserved in a series of periods of time which are also called Service Periods (SPs), within which the STA expects to exchange data packets with the AP, and prioritize the transmission of the low-latency service of the STA. Such mechanism can reduce unnecessary monitoring and waiting time, thereby improving the overall efficiency of the network. In Wi-Fi 7, other STAs than those employing the R-TWT mechanism are prohibited from transmitting data during a specific SP, in order to ensure proper allocation of network resources and avoid potential conflicts. However, the existing wireless mesh networks (e.g. EasyMesh network having multiple APs interconnected therein released by the Wi-Fi Alliance) does not support transmission of an R-TWT low latency service across the whole network, which limits the Wi-Fi network communication efficiency.

### SUMMARY

In view of the above, the present disclosure provides methods and devices for supporting an R-TWT low latency service in a wireless mesh network, and a computer readable medium. In the solutions, the R-TWT membership between the AP and the terminal (e.g. the STA) and parameters thereof can be synchronized within the network, and coordinated channel access can be performed among multiple APs to implement an effective transmission of the R-TWT low latency service at the terminal while improving the communication efficiency.

In a first aspect of the present disclosure, there is provided a first Access Point (AP) device, comprising: at least one processor; and at least one memory storing instructions, wherein the instructions, when executed by the at least one processor, cause the first AP device at least to: send a Restricted Target Wake Time (R-TWT) notification message to a second AP device in a wireless mesh network, the R-TWT notification message at least indicating an R-TWT Service Period (SP) of a terminal having R-TWT membership with the first AP device; and perform, within the R-TWT SP of the terminal, coordinated channel access with the second AP device for transmission of a low latency service of the terminal.

In a second aspect of the present disclosure, there is provided a second Access Point (AP) device, comprising: at least one processor; and at least one memory storing instructions, wherein the instructions, when executed by the at least one processor, cause the second AP device at least to: receive a Restricted Target Wake Time (R-TWT) notification message from a first AP device in a wireless mesh network, the R-TWT notification message at least indicating an R-TWT Service Period (SP) of a terminal having R-TWT membership with the first AP device; broadcast, within the wireless mesh network, an R-TWT service request to other AP devices, the R-TWT service request at least indicating the R-TWT SP; and perform, within the R-TWT SP of the terminal, coordinated channel access with the first AP device for transmission of a low latency service of the terminal.

In a third aspect of the present disclosure, there is provided a method. The method comprises: sending a Restricted Target Wake Time (R-TWT) notification message to a second AP device in a wireless mesh network, the R-TWT notification message at least indicating an R-TWT Service Period (SP) of a terminal having R-TWT membership with the first AP device; and performing, within the R-TWT SP of the terminal, coordinated channel access with the second AP device for transmission of a low latency service of the terminal.

In a fourth aspect of the present disclosure, there is provided a method. The method comprises: receiving a Restricted Target Wake Time (R-TWT) notification message from a first AP device in a wireless mesh network, the R-TWT notification message at least indicating an R-TWT Service Period (SP) of a terminal having R-TWT membership with the first AP device; broadcasting, within the wireless mesh network, an R-TWT service request to other AP devices, the R-TWT service request at least indicating the R-TWT SP; and performing, within the R-TWT SP of the terminal, coordinated channel access with the first AP device for transmission of a low latency service of the terminal.

In a fifth aspect of the present disclosure, there is provided a device. The device comprises: a component for sending a Restricted Target Wake Time (R-TWT) notification message to a second AP device in a wireless mesh network, the R-TWT notification message at least indicating an R-TWT Service Period (SP) of a terminal having R-TWT membership with the first AP device; and a component for performing, within the R-TWT SP of the terminal, coordinated channel access with the second AP device for transmission of a low latency service of the terminal.

In a sixth aspect of the present disclosure, there is provided a device. The device comprises: a component for receiving a Restricted Target Wake Time (R-TWT) notification message from a first AP device in a wireless mesh network, the R-TWT notification message at least indicating an R-TWT Service Period (SP) of a terminal having R-TWT membership with the first AP device; a component for broadcasting, within the wireless mesh network, an R-TWT service request to other AP devices, the R-TWT service request at least indicating the R-TWT SP; and a component for performing, within the R-TWT SP of the terminal, coordinated channel access with the first AP device for transmission of a low latency service of the terminal.

In a seventh aspect of the present disclosure, there is provided a computer readable medium having instructions stored thereon, where the instructions, when executed by at least one processing unit, cause the at least one processing unit to at least execute: sending, at a first AP device, a Restricted Target Wake Time (R-TWT) notification message to a second AP device in a wireless mesh network, the R-TWT notification message at least indicating an R-TWT Service Period (SP) of a terminal having R-TWT membership with the first AP device; and performing, within the R-TWT SP of the terminal, coordinated channel access with the second AP device for transmission of a low latency service of the terminal.

In an eighth aspect of the present disclosure, there is provided a computer readable medium having instructions stored thereon, where the instructions, when executed by at least one processing unit, cause the at least one processing unit to at least execute: receiving, at a second AP device, a Restricted Target Wake Time (R-TWT) notification message from a first AP device in a wireless mesh network, the R-TWT notification message at least indicating an R-TWT Service Period (SP) of a terminal having R-TWT membership with the first AP device; broadcasting, within the wireless mesh network, an R-TWT service request to other AP devices, the R-TWT service request at least indicating the R-TWT SP; and performing, within the R-TWT SP of the terminal, coordinated channel access with the first AP device for transmission of a low latency service of the terminal.

In a ninth aspect of the present disclosure, there is provided a computer program comprising instructions that, when executed by a device, cause a first AP device at least to: send a Restricted Target Wake Time (R-TWT) notification message to a second AP device in a wireless mesh network, the R-TWT notification message at least indicating an R-TWT Service Period (SP) of a terminal having R-TWT membership with the first AP device; and perform, within the R-TWT SP of the terminal, coordinated channel access with the second AP device for transmission of a low latency service of the terminal.

In a tenth aspect of the present disclosure, there is provided a computer program comprising instructions that, when executed by a second apparatus, cause a second AP device at least to: receive a Restricted Target Wake Time (R-TWT) notification message from a first AP device in a wireless mesh network, the R-TWT notification message at least indicating an R-TWT Service Period (SP) of a terminal having R-TWT membership with the first AP device; broadcast, within the wireless mesh network, an R-TWT service request to other AP devices, the R-TWT service request at least indicating the R-TWT SP; and perform, within the R-TWT SP of the terminal, coordinated channel access with the first AP device for transmission of a low latency service of the terminal.

In an eleventh aspect of the present disclosure, there is provided a first AP device. The first AP device comprises: sending circuitry configured to send a Restricted Target Wake Time (R-TWT) notification message to a second AP device in a wireless mesh network, the R-TWT notification message at least indicating an R-TWT Service Period (SP) of a terminal having R-TWT membership with the first AP device; and performing circuity configured to perform, within the R-TWT SP of the terminal, coordinated channel access with the second AP device for transmission of a low latency service of the terminal.

In a twelfth aspect of the present disclosure, there is provided a second AP device. The second AP device comprises: receiving circuitry configured to receive a Restricted Target Wake Time (R-TWT) notification message from a first AP device in a wireless mesh network, the R-TWT notification message at least indicating an R-TWT Service Period (SP) of a terminal having R-TWT membership with the first AP device; broadcast circuitry configured to broadcast, within the wireless mesh network, an R-TWT service request to other AP devices, the R-TWT service request at least indicating the R-TWT SP; and performing circuitry configured to perform, within the R-TWT SP of the terminal, coordinated channel access with the first AP device for transmission of a low latency service of the terminal.

It would be appreciated that this Summary is not intended to identify key features or essential features of the present disclosure, nor is it intended to be used to limit the scope of the present disclosure. Other features of the present disclosure would be made more apparent through the following description.

### BRIEF DESCRIPTION OF THE DRAWINGS

With reference to the following detailed description of the accompanying drawings, the above and other objectives, features, and advantages of the embodiments of the present disclosure will be made clearer. In the drawings, multiple embodiments of the present disclosure are depicted in an exemplary, but non-limiting, manner, where:
Fig. 1 illustrates a block diagram of an example wireless communication system where embodiments of the present disclosure can be implemented.
Fig. 2 illustrates a schematic interaction diagram of a communication method according to some embodiments of the present disclosure.
Fig. 3 illustrates a schematic diagram of synchronizing R-TWT membership information and parameters within a wireless mesh network according to some embodiments of the present disclosure.
Fig. 4 illustrates a schematic diagram of coordinated access based on a Carrier Sense Multiple Access/Collision Avoidance (CSMA/CA) mechanism according to some embodiments of the present disclosure.
Fig. 5 illustrates a schematic diagram of coordinated access based on a fair channel access mechanism according to some embodiments of the present disclosure.
Fig. 6 illustrates a schematic diagram of coordinated access based on Resource Unit (RU) allocation mechanism according to some embodiments of the present disclosure.
Fig. 7 illustrates a schematic diagram of coordinated access based on an RU autonomous coordination mechanism according to some embodiments of the present disclosure.
Fig. 8 illustrates a schematic diagram of a communication system for implementing an RU autonomous coordination mechanism according to some embodiments of the present disclosure.
Fig. 9 illustrates a schematic flowchart of a communication method according to some embodiments of the present disclosure.
Fig. 10 illustrates a schematic flowchart of a further communication method according to some embodiments of the present disclosure.
Fig. 11 illustrates a simplified block diagram of an electronic device adapted to implement embodiments of the present disclosure.
Fig. 12 illustrates a schematic diagram of a computer readable medium adapted to implement embodiments of the present disclosure.

Throughout the drawings, the same or similar reference symbols refer to the same or similar components.

### DETAILED DESCRIPTION OF EMBODIMENTS

Reference below will be made to some example embodiments illustrated in the drawings to describe the principles and spirits of the present disclosure. It would be appreciated that description of those specific embodiments is provided merely to enable those skilled in the art to better understand and implement the present disclosure and is not intended for limiting the scope disclosed herein in any manner.

As described herein, the term "includes" or similar expressions are to be read as open-ended terms that mean "includes, but is not limited to." The term "based on" is to be read as "based at least in part on." The term "an embodiment" or "the embodiment" is to be read as "at least one embodiment." The terms "first," "second," and the like may refer to different objects or the same object unless explicitly indicated otherwise. Other definitions, explicit and implicit, may be included below.

As used herein, the term "determining" encompasses a wide variety of acts. For example, "determining" can include calculating, computing, processing, deriving, investigating, looking up (e.g. looking up in a table, a database or another data structure), ascertaining and the like. Moreover, "determining" may include receiving (e.g., receiving information), accessing (e.g. accessing data in a memory) and the like. Further, "determining" may include resolving, selecting, choosing, establishing, and the like. For "at least one of the following: <a list of two or more elements>," "at least one of <a list of two or more elements>," and the like, as used herein, two or more elements in the list connected by "and" or "or" indicate at least one from those elements, or at least any two or more elements from those elements, or at least all the elements.

The term "circuitry" used herein may refer to one or more or all of the following: (a) hardware-only circuit implementations (such as implementations in only analog and/or digital circuitry); (b) combinations of hardware circuits and software, such as (as applicable): (i) a combination of analog and/or digital hardware circuit(s) with software/firmware, and (ii) any portions of hardware processor(s) with software (including digital signal processor(s), software, and memory(ies) that work together to cause a device, such as a mobile phone or server, to perform various functions); and (c) hardware circuit(s) and/or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, the term "circuitry" also covers an implementation of merely a hardware circuit or processor (or multiple processors) or portion of a hardware circuit or processor and its (or their) accompanying software and/or firmware. The term "circuitry" also covers, for example, if applicable to the particular claim element, a baseband integrated circuit, a processor integrated circuit, or a similar integrated circuit in an accessing point or other computing device.

As aforementioned, the Restricted Target Wake Time (R-TWT) mechanism is a new feature in Wi-Fi 7, and the low latency service of the STA having the R-TWT membership with the AP is prioritized for transmission within a predetermined R-TWT SP. The R-TWT mechanism can reduce unnecessary monitoring and waiting time, thereby improving the overall efficiency of the network. However, the existing Wi-Fi 7 only supports R-TWT membership for a Basic Service Set (BSS). The support of the R-TWT function in a multi-AP wireless mesh network, for example, a WFA EAsyMesh network, has constraints. In the EasyMesh network, the wireless connections may include backhauls among APs, which are typically used to transmit data and control information among the APs. However, the efficient low latency solution of the R-TWT is only applicable between a specific STA and APs connected therewith, and those backhaul connections are not aware of, and will not process preferentially, the low latency service related to the R-TWT. On the other hand, other APs do not know the R-TWT SP or implement transmission in this period, resulting in network performance degradation or other conflicts. These issues will cause an increase in overall transmission delay, especially in real-time applications that require quick responses.

In addition to the need for synchronizing the R-TWT membership and parameters among all the APs (including a root AP) in a wireless mesh network, there is a further need for a coordination mechanism for managing multiple APs within the R-TWT SP. The coordination mechanism should guarantee that time-sensitive data packets can be transferred across the wireless mesh network with minimum latency.

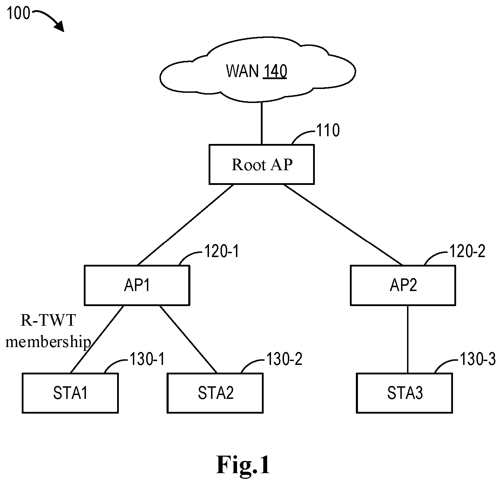

In view of the above, the embodiments of the present disclosure provide solutions for supporting an R-TWT low latency service in a wireless mesh network. In an example method, an AP device synchronizes its R-TWT membership information with terminals to other APs within the wireless mesh network. In the method, within a Service Period (SP) of the R-TWT, a related AP within the network can perform coordinated channel access to prioritize transmission of a low latency service of the terminal having R-TWT membership within the SP of the R-TWT. In some implementations, the AP can send the R-TWT membership information to an AP controller (e.g. a root AP) within the network, and the AP controller then distributes the R-TWT membership information to other APs within the network. In addition, in order to implement coordinated channel access within the R-TWT SP, the embodiments of the present disclosure further provide multiple channel access mechanisms to support low latency services of transmission and reception terminals of the related AP. Reference below will be made to Figs. 1-12 to describe in detail embodiments of the present disclosure.

Fig. 1 illustrates a block diagram of an example wireless communication system 100 where embodiments of the present disclosure can be implemented. In some implementations, the wireless communication system 100 may be a wireless mesh network according to the Wi-Fi 7 standard, for example, an EasyMesh network. As shown therein, the wireless communication network 100 includes a root AP 110, and multiple APs communicatively coupled to the root AP 110, including AP1 120-1 and AP2-120-2 (individually or collectively referred to as AP 120). Each AP 120 can wirelessly communicate with the root AP 110. The communication link between the root AP 110 and the AP may be referred to as backhaul link. The wireless communication network 100 further includes multiple stations STA1 130-1, STA2 130-2, and STA 3 130-3 (individually or collectively referred to as STA 130). In some implementations, the STA 130 can be implemented as a terminal having a wireless communication capability to access the AP. The AP 120 can provide a wireless access service to the STA 130, for example, by means of a Wi-Fi communication protocol. As shown therein, the STA1 and STA2 may wirelessly access the AP1, and the STA3 may wirelessly access the AP2. The communication link between the AP 120 and the STA 130 can be referred to as fronthaul link. The STA 130 can access a Wide Area Network (WAN) 140 via the AP 120 and the root AP 110 coupled therewith, to transmit/receive data to/from the WAN 140. The data from the STA 130 via the AP 120 and the root AP 110 to the WAN 140 are referred to as uplink service, while the data from the WAN 140 via the root AP 110 and the AP 120 to the STA 130 are referred to as downlink service.

As shown therein, the wireless communication network 100 can be implemented with a hierarchical structure, where the root AP 110 is located on the top layer, and the AP 120 directly communicating with the STA 130 is located on a lower layer. In this way, the service data of the STA 130 can be transmitted or received via multiple hops. Although the wireless communication network 100 in Fig. 1 is shown as including two layers of APs (i.e., the AP 110 at a higher layer, and the AP 120 at a lower layer), it would be appreciated that the wireless communication network 110 may include more layers (e.g. the STA 130 can access the WAN 140 via more hops) or fewer layers (e.g. the STA 130 can be directly coupled to the root AP 110). In some implementations, the root AP 110 can be configured to control other APs 120 in the wireless communication network 110, which can thus be referred to as AP controller, primary AP, or the like. The AP 120 can be referred to as proxy AP or extended AP.

It is worth noting that the wireless communication network 100 as shown in Fig. 1 is provided only illustratively, which may include a different number of devices and terminals than that shown in Fig. 1, for example, more or fewer APs and more or fewer STAs, and may have a different topology than that shown in Fig. 1. The present disclosure is not limited in the aspect.

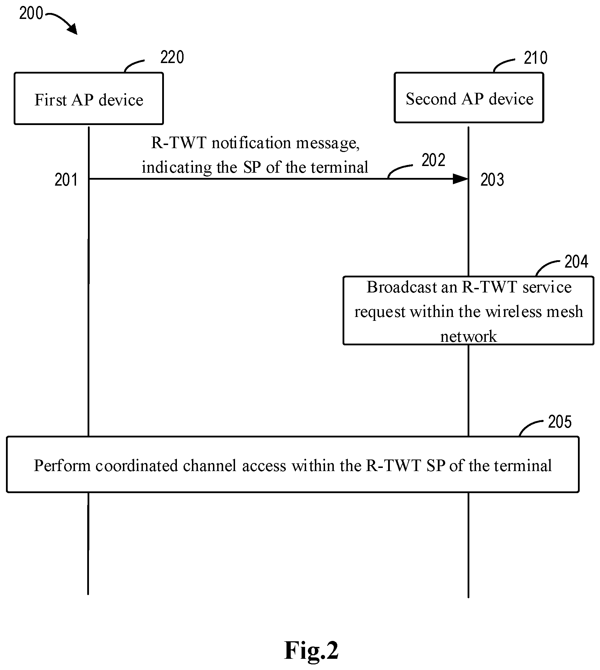

Fig. 2 illustrates a schematic interaction diagram of a communication method 200 according to some embodiments of the present disclosure. The communication method 200 involves a first AP device 220 and a second AP device 210, where the first AP device 220 may be the AP1 120-1 as shown in Fig. 1, and the second AP device 210 may be the root AP 110 as shown in Fig. 1. Referring to Fig. 2, the communication method 200 between the first AP device 220 and the second AP device 210 according to the embodiments of the present disclosure is presented below:
At 201, the first AP device 220 sends an R-TWT notification message 202 to the second AP device 210. Correspondingly, at 203, the second AP device 210 receives the R-TWT notification message from the first AP device 220. In some embodiments, the R-TWT notification message 202 is transmitted via a wireless backhaul link.

The R-TWT notification message 202 at least indicates an R-TWT Service Period (SP) of a terminal having R-TWT membership with the first AP device 220. The terminal may be the STA1 130-1 as shown in Fig. 1. In some embodiments, the R-TWT notification message 202 can indicate the R-TWT SP by means of a start time of the R-TWT SP and an interval between adjacent R-TWT SPs. In some embodiments, the R-TWT notification message 202 may also include an identifier (BSSID) of a Basic Service Set (BSS) for implementing R-TWT scheduling, and a Media Access Control (MAC) address of the corresponding terminal. The BSSID may be, for example, an MAC address of the first AP device.

At 204, the second AP device 210 broadcasts an R-TWT service request to other AP devices (e.g. AP2 120-2 in Fig. 1) within the wireless mesh network. The R-TWT service request may include information on the R-TWT SP reported by the first AP device, including a start time of R-TWT SPs and an interval between R-TWT SPs, an MAC address of the terminal, and an MAC address of the first AP device 220. In response to receiving the R-TWT service request, other AP devices can know the first AP device 220 and the R-TWT SP of the corresponding terminal, so as to aid the wireless mesh network in handling the low latency service of the terminal with high priority, which may be silent within the R-TWT SP, for example. In this way, the R-TWT membership information and related parameters of the first AP device 220 and the corresponding terminal are synchronized to the whole wireless mesh network.

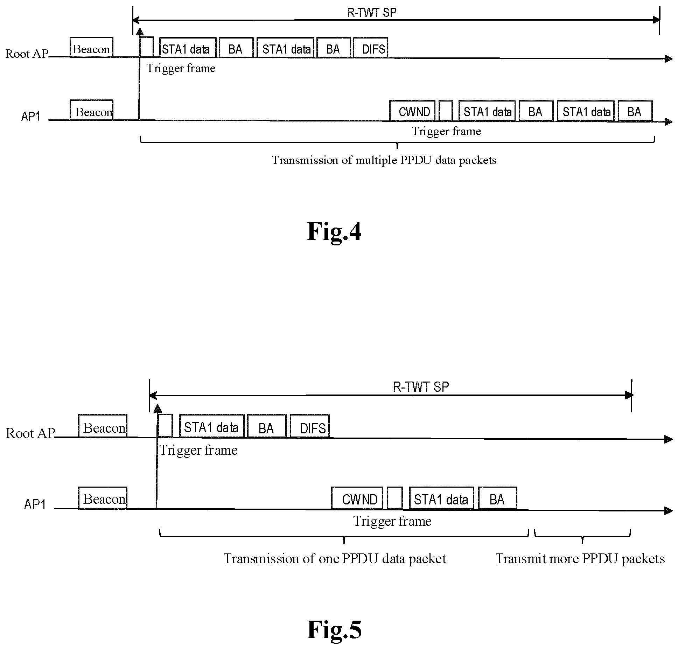

At 205, within the R-TWT SP of the terminal, the second AP device 210 and the first AP device 220 perform coordinated channel access for transmission of the low latency service of the terminal. Since there is a silent period before the SP, services of other APs or terminals irrelevant to the low latency service of the R-TWT terminal are excluded, to prioritize transmission of the low latency service of the terminal. Reference below will be made to Figs. 4-8 to describe in detail multiple coordinated channel access mechanisms provided by the embodiments of the present disclosure.

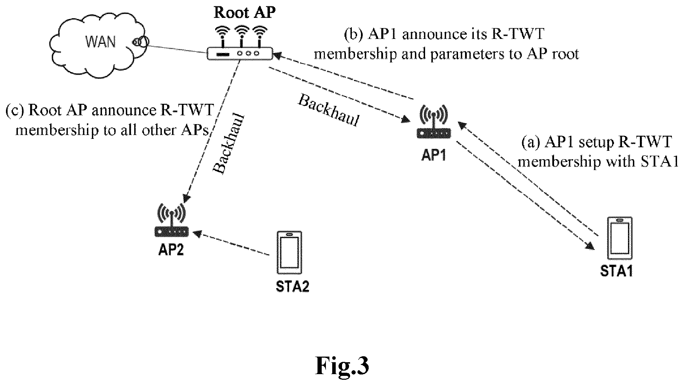

Fig. 3 illustrates a schematic diagram of synchronizing R-TWT membership information and parameters within a wireless mesh network according to some embodiments of the present disclosure. The components shown in Fig. 3 include a root AP, an AP1, an STA1, an AP2 and an STA2, where the AP1 may be an example implementation of the first AP device 220 shown in Fig. 2, and the root AP may be an example implementation of the second AP device 210. As shown in Fig. 3, the process of synchronizing the R-TWT membership information within the wireless mesh network is presented below:

At step a, the AP1 and the STA1 sets up R-TWT membership. The R-TWT membership may include a start time of SP(s), an interval between SPs, and other parameters.

At step b, the AP1 notifies the root AP of its R-TWT membership information and parameters. In some embodiments, the AP1 sends to the root AP an R-TWT management notification message with an R-TWT management descriptor TLV, to notify the multi-AP controller of the root AP. The specific parameters of the R-TWT management descriptor TLV is shown in Table 1:

**Table 1: R-TWT management descriptor TLV**

| Field name | Length | Value | Description |
|---|---|---|---|
| tlvType | 1 octet | 0xEA | R-TWT Management Descriptor TLV |
| tlvLength | 2 octets | Variable | Number of octets in ensuing field |
| tlvValue | | | |
| BSSID | 6 octets | Variable | BSSID of BSS for which the AP agent is applied as an R-TWT scheduling AP |
| Client MAC | 6 octets | Variable | MAC address of R-TWT member STA |
| R-TWT SP start time | 1 octet | Variable | R-TWT SP start time |
| Next R-TWT Wake time | 1 octet | Variable | Interval between R-TWT SPs |

In Table 1, the field BSSID indicates a basic service set identifier applied at the AP1, for example, a Media Access Control (MAC) address of the AP1; the field Client MAC indicates an MAC address of the STA1; the field R-TWT SP start time indicates a start time of R-TWT SP(s) of the STA1; and the field Next R-TWT Wake time indicates an interval between R-TWT SPs.

At step c, the root AP broadcasts the R-TWT membership information and parameters from the AP1 to other APs. In some embodiments, the multi-AP controller of the root AP propagates the R-TWT management treatment by sending an R-TWT service request containing the R-TWT management descriptor TLV, so as to configure other APs. The wireless mesh network maintains R-TWT information as common parameters between the multi-AP controller of the root AP and all the AP agents. In some embodiments, when the AP1 terminates the R-TWT membership with the STA1, the multi-AP controller of the root AP and other APs will be notified of the information in the same manner.

In the whole wireless mesh network, extending an individual R-TWT of a Basic Service Set (BSS) is a precondition to implement the low latency service with high priority across the wireless mesh network. Further, in order to support the low latency service across the whole wireless mesh network, an effective mechanism is still needed to coordinate the channel access and data forwarding scheduling within the SP among all these APs cross the wireless mesh network.

Figs. 4-7 illustrate schematic diagrams of channel coordination mechanisms according to some embodiments of the present disclosure. According to the R-TWT service information field definitions, these mechanisms are applicable to upstream and downstream service. The upstream service is sent from the STA1 to the AP1 over the fronthaul Wi-Fi association between the STA1 and the AP1, and further forwarded from the AP1 to the root AP over the backhaul link between the AP1 and the root AP. The root AP finally sends the upstream service to the WAN side network over the uplink interface of the root AP. In the upstream service, the AP1 identifies the specific service based on the source MAC address of the STA1. The downlink service is sent from the root AP to the AP1 over the backhaul link between the root AP and the AP1, and further forwarded from the AP1 to the STA1 over the fronthaul Wi-Fi association between the STA1 and the AP1. In the downlink service, the root AP identifies the specific service based on the destination MAC address towards the STA1. It would be appreciated that the resources obtained by the root AP and the AP1 can be used not only to transmit the service data, but also to receive the service data. For example, the AP1 can obtain not only resources from transmitting the uplink service from the STA1, but also resources for transmitting the uplink service to the root AP; the AP1 can further obtain resources for transmitting the downlink service to the STA1. Likewise, the root AP can obtain not only the resources for transmitting the downlink service to the AP1, but also the resources for transmitting the uplink service from the AP1 thereto.

Fig. 4 illustrates an example of a Carrier Sense Multiple Access/Collision Avoidance (CSMA/CA) mechanism according to some embodiments of the present disclosure. Within the R-TWT SP, multiple APs utilize a standard CSMA/CA channel access mechanism, to obtain the channel access and forward the low latency service of the STA1 in the wireless mesh network. According to the CSMA/CA channel access mechanism, the root AP and the AP1 contend to obtain the time window for transmitting data.

In Fig. 4, the root AP obtains the channel access in the R-TWT SP via contention, and then transmits multiple Physical Layer Protocol Data Unit (PPDU) data packets over the backhaul link between the root AP and the AP1. After the interval of DIFS, the AP1 can obtain the access permission based on the CSMA/CA mechanism, and then transmit the PPDU data packets over the fronthaul link between the AP1 and the STA1. After the AP1 and the STA1 release the access permission, the AP1 and the root AP can contend again. In some implementations, the root AP and the AP1 can transmit the PPDU data packets in every possible manner.

Fig. 5 illustrates a coordinated access mechanism based on a fair channel access mechanism according to some embodiments of the present disclosure. In the R-TWT SP, multiple APs including the root AP and the AP1 (this is dependent on the network topology, and more intermediate APs are included if there are multiple hops between the AP1 and the root AP) contend for channel access of data transmission, and these APs include data packets of the low latency service cached by the STA1. In the fair channel access mechanism, each AP stops transmission after having transmitted a predetermined number of PPDU data packets (e.g. one PPDU data packet), to allow other APs to contend for the channel access resources and thus enable transmission of the PPDU data packets thereof over the wireless mesh network.

For example, in Fig. 5, for the downlink service, the root AP contends for and obtains the channel access, to transmit one PPDU data packet, and then stops transmission to allow the AP1 to contend for channel access for transmitting the PPDU data packet to the STA1 over the fronthaul link within the R-TWT SP. In order to achieve efficient channel access coordination among all the APs, for the downlink low latency service, the root AP can set a bigger contention window, and the AP1 can set a smaller contention window. The smaller contention window is advantageous for obtaining channel access through contention such that the low latency service can arrive at the root AP with a lower latency.

For the uplink service, the AP1 contends for and obtains the channel access to transmit a PPDU packet to the STA1, and then stops the transmission of the STA1, to enable the root AP to contend for the channel access and trigger the AP1 to send the PPDU data packet to the root AP via the backhaul link within the R-TWT SP. In order to achieve efficient channel access coordination among all the APs, for the uplink low latency service, the AP1 can set a bigger contention window, and the root AP can set a smaller contention window in the upstream. The smaller contention window is advantageous for obtaining channel access such that the low latency service can arrive at the root AP with a lower latency.

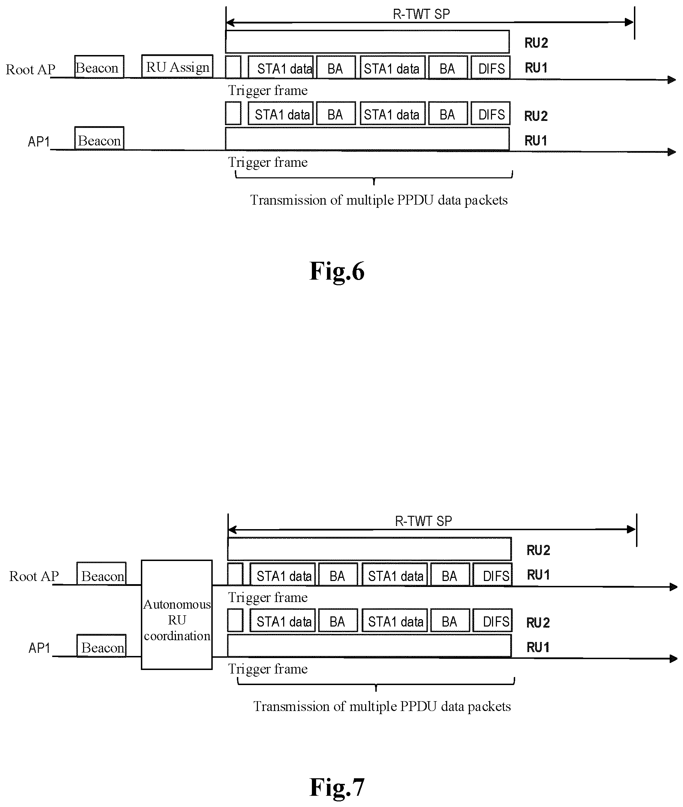

Fig. 6 illustrates a schematic diagram of coordinated access based on a Resource Unit (RU) allocation mechanism according to some embodiments of the present disclosure. In the R-TWT SP, the root AP can directly allocate different RUs (i.e., frequency bands or frequency resources) to APs involved in the R-TWT low latency service data transmission, such that all the APs can transmit the data packets concurrently via the allocated RUs.

As shown therein, based on the topology structure of the wireless mesh network, the buffer status of each AP low latency service, the R-TWT parameters and the membership information, and the like, the root AP can allocate the RU1 to the data transmission between the root AP and the AP1, and the RU2 to the data transmission between the AP1 and the STA1. In Fig. 6, the RU1 and the RU2 have the same validity within the R-TWT SP. Within the R-TWT SP, the root AP and the AP1 transmit the data packets independently and concurrently in the wireless mesh network by means of the respective RUs thereof.

To this end, the root AP can send the RU allocation message to the AP1, to indicate the frequency band allocated to the AP1. The RU allocation message may include an R-TWT RU management descriptor TLV for multiple APs. The example R-TWT RU management descriptor TLV is shown in Table 2:

**Table 2: R-TWT RU Management Descriptor TLV**

| Field Name | Length | Value | Description |
|---|---|---|---|
| tlvType | 1 octet | 0xEA | R-TWT RU Management Descriptor TLV |
| tlvLength | 2 octets | Variable | Number of octets in ensuing field |
| tlvValue | | | |
| R-TWT ID | 1 octet | Variable | R-TWT for which the RU resource is coordinated within the SP |
| BSSID | 6 octets | Variable | BSSID of BSS for which the AP agent owns the RU within the R-TWT SP |
| RU | 2 octets | Variable | For the RU value to be announced or synchronized, refer to the RU allocation subfield defined in 802.11 physical layer |

In Table 2, the field R-TWT ID indicates an identifier of the related R-TWT for which the RU resource is coordinated within the SP; the field BSSID indicates a basic service set identifier applied at the AP1, for example, an MAC address of the AP1; the field RU indicates the RU value to be allocated. In some implementations, the root AP can broadcast an RU allocation message within the network, and synchronize the related RU information (including the RU of the root AP, and the RU of the AP 1) to other APs within the network.

Fig. 7 illustrates a schematic diagram of coordinated access based on an RU autonomous coordination mechanism according to some embodiments of the present disclosure. In addition to the manner of allocating, by the root AP, the frequency resource as depicted in Fig. 6, the plurality of APs within the network can also negotiate the frequency resources used within the SP. For APs that transmits/receives a data packet to/from the STA1 in the wireless mesh network, they can broadcast RUs required for data transmission within the SP, which will be synchronized to other related APs to forward the data of the STA1 in the wireless mesh network. These APs can negotiate non-overlapping RUs, and each AP then can use the respective RU thereof within the SP to concurrently forward the low latency service. In some embodiments, the AP1 can select an RU to be used within the SP and send a notification message of the selected RU, and other APs therefore do not select an RU overlapping with the RU, respectively. Likewise, the root AP can also select an RU to be used in the SP and send a corresponding notification message within the network, and other APs will not select an RU overlapping therewith, respectively.

In Fig. 7, the root AP and the AP1 negotiate the RUs with each other. Alternatively, the root AP announces the RU1 as its frequency band for data transmission between the root AP and the AP1, and then notifies the AP1. The AP1 checks the available RU resource and announces the RU2 as its effective frequency band for data transmission between the AP1 and the STA1. As such, the root AP and the AP1 can concurrently transmit or receive data packets, without contending against each other. RU announcement and synchronization can be implemented with control messages of the wireless mesh network.

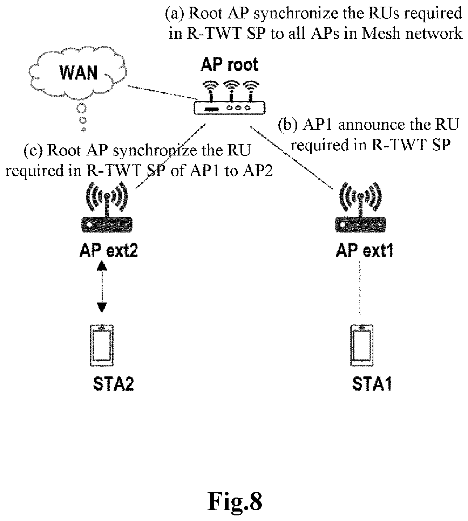

Fig. 8 illustrates a schematic diagram of a communication system for implementing an RU autonomous coordination mechanism according to some embodiments of the present disclosure. At step a, the root AP synchronizes the RUs required in the R-TWT SP to all the APs including the AP1 and the AP2 in the wireless mesh network. At step b, the AP1 announces the RU that it is required in the R-TWT SP, and sends the corresponding RU notification message to the root AP, as shown in Fig. 8. At step c, the root AP synchronizes the RU required by the AP1 within the R-TWT SP to the AP2.

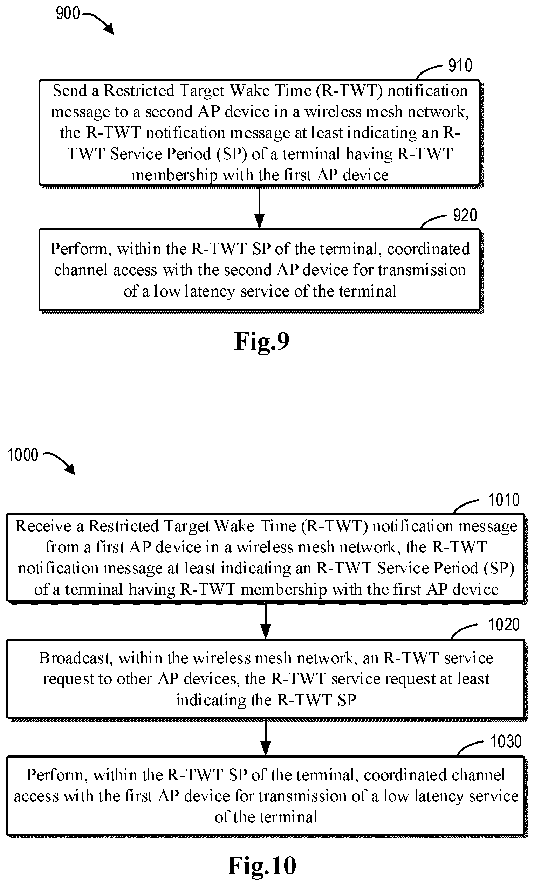

Fig. 9 illustrates a schematic flowchart of a communication method according to some embodiments of the present disclosure. In some embodiments, the method 900 can be implemented by the first AP device 220 in Fig. 2. In some other embodiments, the method 900 can also be implemented at any other AP or other devices with a similar function.

At block 910, the first AP device sends a Restricted Target Wake Time (R-TWT) notification message to a second AP device in a wireless mesh network, where the R-TWT notification message at least indicates an R-TWT Service Period (SP) of a terminal having R-TWT membership with the first AP device. At block 920, the first AP device performs, within the R-TWT SP of the terminal, coordinated channel access with the second AP device for transmission of a low latency service of the terminal.

In some embodiments, the R-TWT notification message comprises at least one of the following: a Media Access Control (MAC) address of the first AP device; an MAC address of the terminal; a start time of R-TWT SPs; and an interval between the R-TWT SPs.

In some embodiments, performing the coordinated channel access with the second AP device includes: contending against at least the second AP device for a time window for transmission of the low latency service by means of a Carrier Sense Multiple Access/Collision Avoidance (CSMA/CA) mechanism.

In some embodiments, performing the coordinated channel access with the second AP device includes: after transmitting or receiving a predetermined number of data units of the low latency service, stopping transmission or reception of the low latency service, to allow contention channel access with at least the second AP device. Alternatively, for a downlink low latency service, a contention time window of the first AP device is less than a time window of the second AP device; or for an uplink low latency service, a contention time window of the first AP device is greater than a time window of the second AP device.

In some embodiments, performing the coordinated channel access with the second AP device includes: receiving a Resource Unit (RU) allocation message from the second AP device, the RU allocation message indicating a frequency band allocated to the first AP device; and transmitting or receiving, concurrently with at least the second AP device, the low latency service of the terminal within the R-TWT SP, using the allocated frequency band. Alternatively, the RU allocation message includes at least one of the following: an identifier of an R-TWT associated with the RU; an MAC address of the access point; and a value of the RU.

In some embodiments, performing the coordinated channel access with the second AP device includes: sending a first RU notification message indicating a first frequency band to be used by the first AP device within the R-TWT SP; receiving, from the second AP device, a second RU notification message indicating a second frequency band to be used by the second AP device within the R-TWT SP; and transmitting or receiving, concurrently with at least the second AP device, the low latency service of the terminal within the R-TWT SP, using the first frequency band.

In some embodiments, the first AP device comprises an extended AP, and the first AP device is lower than the second AP device in hierarchy of the wireless mesh network.

In some embodiments, a device capable of executing the method 900 (e.g. a first AP device 220) may include components for executing respective operations of the method 900. The components can be implemented in any suitable form. For example, the components can be implemented in a circuitry system or a software module.

In some embodiments, the device may include a component for sending a Restricted Target Wake Time (R-TWT) notification message to a second AP device in a wireless mesh network, where the R-TWT notification message at least indicates an R-TWT Service Period (SP) of a terminal having R-TWT membership with the first AP device. The device may further include a component for performing, within the R-TWT SP of the terminal, coordinated channel access with the second AP device for transmission of a low latency service of the terminal.

In some embodiments, the device may further include a component for performing other steps according to some embodiments of the method 900. In some embodiments, the component includes at least one processor, and at least one memory storing computer codes. The at least one memory and the computer codes are configured, together with the at least one processor, to enable execution of the device.

Fig. 10 illustrates a schematic diagram of a further communication method according to some embodiments of the present disclosure. The method 1000 can be implemented at the second AP device 210 in Fig. 2. In some other embodiments, the method 1000 can also be implemented at other APs or other devices having a similar function.

At block 1010, the second AP device can receive a Restricted Target Wake Time (R-TWT) notification message from a first AP device in a wireless mesh network, where the R-TWT notification message at least indicates an R-TWT Service Period (SP) of a terminal having R-TWT membership with the first AP device. At block 1020, the second AP device can broadcast, within the wireless mesh network, an R-TWT service request to other AP devices, where the R-TWT service request at least indicates the R-TWT SP. At block 1030, the second AP device performs, within the R-TWT SP of the terminal, coordinated channel access with the first AP device for transmission of a low latency service of the terminal.

In some embodiments, the R-TWT notification message comprises at least one of the following: a Media Access Control (MAC) address of the first AP device; an MAC address of the terminal; a start time of R-TWT SPs; and an interval between R-TWT SPs.

In some embodiments, performing the coordinated channel access with the first AP device includes: contending against at least the first AP device for a time window for transmission of the low latency service by means of a Carrier Sense Multiple Access/Collision Avoidance (CSMA/CA) mechanism.

In some embodiments, performing the coordinated channel access with the first AP device includes: after transmitting or receiving a predetermined number of data units of the low latency service, stopping transmission or reception of the low latency service, to allow contention channel access with at least the second AP device. Alternatively, for a downlink low latency service, a contention time window of the first AP device is less than a time window of the second AP device; or for an uplink low latency service, a contention time window of the first AP device is greater than a time window of the second AP device.

In some embodiments, performing the coordinated channel access with the first AP device includes: sending a Resource Unit (RU) allocation message to the first AP device, the RU allocation message indicating a frequency band allocated to the first AP device.

In some embodiments, the RU allocation message includes at least one of the following: an identifier of an R-TWT associated with the RU; an MAC address of the first access point; and a value of the RU.

In some embodiments, performing the coordinated channel access with the first AP device includes: transmitting the low latency service of the terminal concurrently with at least the first AP device within the R-TWT SP, using a frequency band not overlapping with the frequency band of the first AP device.

In some embodiments, performing the coordinated channel access with the first AP device includes: receiving from the first AP device a first RU notification message indicating a first frequency band to be used by the first AP device within the R-TWT SP; sending a second RU notification message indicating a second frequency band to be used by the second AP device within the R-TWT SP; and transmitting or receiving, concurrently with at least the first AP device, the low latency service of the terminal within the R-TWT SP, using the second frequency band.

In some embodiments, the second AP device is higher than the first AP device in hierarchy of the wireless mesh network.

In some embodiments, the second AP device includes a root AP of the wireless mesh network.

In some embodiments, a device capable of executing the method 1000 (e.g. the second AP device 210) may include components for executing respective operations of the method 1000. The components can be implemented in any suitable form. For example, the components can be implemented in a circuitry system or a software module.

In some embodiments, the device may include a component for receiving a Restricted Target Wake Time (R-TWT) notification message from a first AP device in a wireless mesh network, where the R-TWT notification message at least indicates an R-TWT Service Period (SP) of a terminal having R-TWT membership with the first AP device. The device may further include a component for broadcasting, within the wireless mesh network, an R-TWT service request to other AP devices, the R-TWT service request at least indicating the R-TWT SP. In addition, the device may include a component for performing, within the R-TWT SP of the terminal, coordinated channel access with the first AP device for transmission of a low latency service of the terminal.

In some embodiments, the device may further include a component for performing other steps according to some embodiments of the method 1000. In some embodiments, the component includes at least one processor, and at least one memory storing computer code. The at least one memory and the computer code are configured, together with the at least one processor, to enable execution of the device.

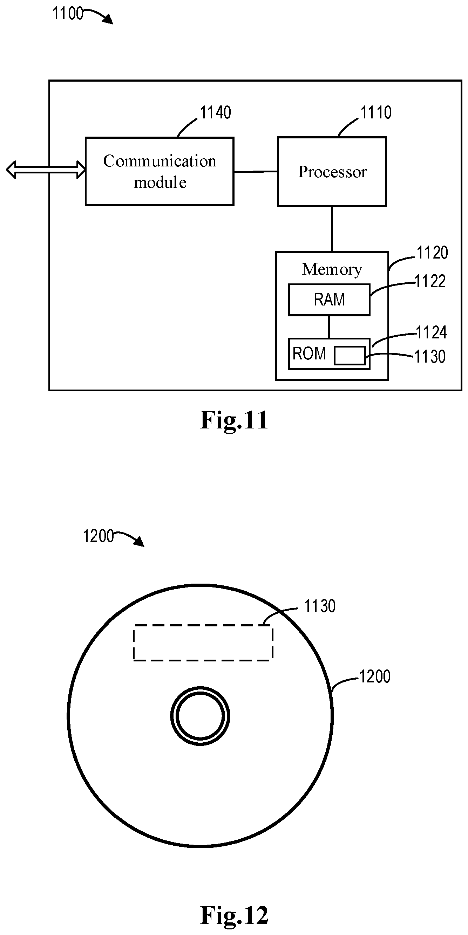

Fig. 11 illustrates a simplified block diagram of an electronic device 1100 adapted to implement embodiments of the present disclosure. The device 1100 can be provided to implement a communication device, for example, the AP1 and the root AP shown in Fig. 1. As shown therein, the device 1100 includes one or more processors 1110, one or more memories 120 coupled to the processor(s) 1110, and one or more communication documents 1140 coupled to the processor(s) 1110.

The communication module 1140 is used for bidirectional communication. For example, the communication module 1140 may include a transmitter, a receiver, or a transceiver for use in the embodiments of the present disclosure. The communication interface can indicate any interface necessary for other network elements.

The processor 1110 can be of any appropriate type adapted to a local technical environment, and can include, but is not limited to, one or more of a general-purpose computer, a dedicated-purpose computer, a microcontroller, a digital signal controller (DSP), and a processor based on multi-core processor architecture. The communication device 1100 can include multiple processors, such as dedicated integrated circuit chips temporally slave to a clock in synchronization with a main processor.

The memory 120 may include one or more non-volatile memories, and one or more volatile memories. The examples of the non-volatile memory include, but are not limited to, a Read-Only Memory (ROM) 1124, an Erasable Programmable Read-Only Memory (EPROM), a flash memory, a hard disk, a Compact Disc (CD), a Digital Versatile Disk (DVD), and other magnetic and/or optical storage devices. Examples of volatile memory include, but are not limited to, a Random-Access Memory (RAM) 1122, and other non-volatile memories that do not persist throughout the duration of power outage.

The computer program 1130 includes computer executable instructions executed by an associated processor 1110. The program 1130 can be stored in the ROM 1120. The processor 1110 can perform any appropriate act and processing by loading the program 1130 into the RAM 1120.

The embodiments of the present disclosure can be implemented by means of the program 1130, to cause the device 1100 to perform any method or process of the present disclosure as depicted in Figs. 9 and 10. The embodiments of the present disclosure can also be implemented by hardware or a combination of software and hardware.

In some embodiments, the program 1130 can be included tangibly in a computer readable medium that may be included in the device 1100 (e.g. the memory 1120) or other storage devices that can be accessed by the device 1100. The program 1130 can be loaded from the computer readable medium to the RAM 1122 for execution. The computer readable medium may include any type of tangible non-volatile memory such as an ROM, an EPPROM, a flash memory, a hard disk, a CD, a DVD, and the like.

Fig. 12 illustrates an example of a computer readable medium 1200 in the form of CD or DVD. The computer readable medium has the program 1130 stored thereon.

In general, various embodiments of the present disclosure can be implemented by hardware or special-purpose circuitry, software, logic, or any combination thereof. Some aspects can be implemented using hardware, while other aspects can be implemented using firmware or software, which can be executed by a controller, a microprocessor or other computing device. Although the various aspects of the embodiments of the present disclosure are shown and depicted as block diagrams, flowcharts or other graphic representations, it would be appreciated that the blocks, devices, systems, techniques or methods as described herein can be implemented, as non-limiting examples, as hardware, software, firmware, special-purpose circuitry or logic, general-purpose hardware or controllers or other computing devices, or a certain combination thereof.

The present disclosure further provides at least one computer program product tangibly stored on a non-transitory computer readable storage medium. The computer program product includes computer executable instructions, for example, instructions included in a program module, which are executed in a device on a target physical or virtual processor, to perform the methods 200, 900 and 1000 as described above with reference to Figs. 2, 9 and 10. Generally, the program module includes a routine, program, library, object, class, component, data structure and the like, which executes a particular task or implement a particular abstract data structure. In various embodiments, the functions of the program modules can be merged or split among the program modules described herein. A machine executable instruction for a program module can be executed locally or within a distributed device. In a distributed device, a program module can be located in both of a local and a remote storage medium.

Program codes for carrying out methods of the present disclosure may be written in any combination of one or more programming languages. These program codes may be provided to a processor or controller of a general-purpose computer, special-purpose computer, or other programmable data processing devices, such that the program codes, when executed by the processor or other programmable data processing devices, cause the functions/operations specified in the flowcharts and/or block diagrams to be implemented. The program code may execute entirely on a machine, partly on the machine, as a stand-alone software package, partly on the machine and partly on a remote machine or entirely on the remote machine or server.

In the context of this disclosure, computer program codes or related data can be carried by any appropriate carrier, such as an apparatus, device or processor can execute various processing and operations as described above. The examples of the carrier include a signal, a computer readable medium and the like. The examples of the signal can include a signal broadcast electrically, optically, wirelessly, acoustically or in other forms, such as a carrier, an infrared signal and the like.

A computer readable medium may be any tangible medium that may contain, or store a program for use by or in connection with an instruction execution system, apparatus or device. The computer readable medium may be a computer readable signal medium or a computer readable storage medium. A computer readable medium may include, but is not limited to, an electronic, magnetic, optical, electromagnetic, infrared, or semiconductor system, apparatus, or device, or any suitable combination of the foregoing. More specific examples of the computer readable storage medium would include an electrical connection having one or more wires, a portable computer diskette, a hard disk, a Random Access Memory (RAM), a Read-Only Memory (ROM), an Erasable Programmable Read-Only Memory (EPROM or Flash memory), an optical fiber, a portable Compact Disc Read-Only Memory (CD-ROM), an optical storage device, a magnetic storage device, or any suitable combination of the foregoing. The term "non-transitory" or "non-transient" as used herein defines a medium *per se* (e.g., tangible, which is not a signal), rather than the persistence of data storage (e.g. RAM and ROM).

Further, although operations of the present methods are described in a particular order in the drawings, it does not require or imply that these operations are necessarily performed according to this particular sequence, or a desired outcome can only be achieved by performing all shown operations. On the contrary, the execution order for the steps as depicted in the flowcharts may be varied. Alternatively, or in addition, some steps may be omitted, a plurality of steps may be merged into one step, or a step may be divided into a plurality of steps for execution. It would be appreciated that features and functions of two or more devices according to the present disclosure can be implemented in combination in a single device. Conversely, various features and functions that are described in the context of a single device may also be implemented in multiple devices.

Although the present disclosure has been described with reference to various embodiments, it should be understood that the present disclosure is not limited to the example embodiments disclosed above. The present disclosure is intended to cover various modifications and equivalent arrangements included in the spirit and scope of the appended claims.

## Claims

1. A first Access Point, AP, device (220), comprising:
at least one processor; and
at least one memory storing instructions, wherein the instructions, when executed by the at least one processor, cause the first AP device at least to:
send (201) a Restricted Target Wake Time, R-TWT, notification message (202) to a second AP device (210) in a wireless mesh network, the R-TWT notification message (202) at least indicating an R-TWT Service Period, SP, of a terminal having R-TWT membership with the first AP device (220); and
perform (205), within the R-TWT SP of the terminal, coordinated channel access with the second AP device (210) for transmission of a low latency service of the terminal.

2. The first AP device (220) of claim 1, wherein the R-TWT notification message (202) comprises at least one of the following:
a Media Access Control, MAC, address of the first AP device;
an MAC address of the terminal;
a start time of the R-TWT SP; and
an interval between R-TWT SPs.

3. The first AP device (220) of claim 1, wherein performing (205) the coordinated channel access with the second AP device comprises:
contending against at least the second AP device for a time window for transmission of the low latency service by means of a Carrier Sense Multiple Access/Collision Avoidance, CSMA/CA, mechanism.

4. The first AP device (220) of claim 1, wherein performing (205) the coordinated channel access with the second AP device (210) comprises:
after transmitting or receiving a predetermined number of data units of the low latency service, stopping transmission or reception of the low latency service, to allow contention channel access with at least the second AP device (210)
, wherein for example,
for a downlink low latency service, a contention time window of the first AP device (220) is less than a time window of the second AP device (210); or
for an uplink low latency service, a contention time window of the first AP device (220) is greater than a time window of the second AP device (210).

5. The first AP device (220) of claim 1, wherein performing the coordinated channel access with the second AP device (210) comprises:
receiving a Resource Unit, RU, allocation message from the second AP device, the RU allocation message indicating a frequency band allocated to the first AP device; and
transmitting or receiving, concurrently with at least the second AP device, the low latency service of the terminal within the R-TWT SP, using the allocated frequency band
, wherein for example the RU allocation message comprises at least one of the following:
an identifier of an R-TWT associated with the RU;
an MAC address of the access point; and
a value of the RU.

6. The first AP device (220) of claim 1, wherein a) performing the coordinated channel access with the second AP device comprises:
sending a first RU notification message indicating a first frequency band to be used by the first AP device within the R-TWT SP;
receiving, from the second AP device, a second RU notification message indicating a second frequency band to be used by the second AP device within the R-TWT SP; and
transmitting or receiving, concurrently with at least the second AP device, the low latency service of the terminal within the R-TWT SP, using the first frequency band,
, and/or wherein b) the first AP device comprises an extended AP, and the first AP device is lower than the second AP device in hierarchy of the wireless mesh network.

7. A second Access Point, AP, device (210), comprising:
at least one processor; and
at least one memory storing instructions, wherein the instructions, when executed by the at least one processor, cause the second AP device (210) at least to:
receive (203) a Restricted Target Wake Time, R-TWT, notification message (202) from a first AP device (220) in a wireless mesh network, the R-TWT notification message at least indicating an R-TWT Service Period, SP, of a terminal having R-TWT membership with the first AP device (220);
broadcast (204), within the wireless mesh network, an R-TWT service request to other AP devices, the R-TWT service request at least indicating the R-TWT SP; and
perform (205), within the R-TWT SP of the terminal, coordinated channel access with the first AP device (220) for transmission of a low latency service of the terminal.

8. The second AP device (210) of claim 7, wherein a) the R-TWT notification message comprises at least one of the following:
a Media Access Control, MAC, address of the first AP device;
an MAC address of the terminal;
a start time of the R-TWT SP; and
an interval between R-TWT SPs, and/or
wherein b) performing the coordinated channel access with the first AP device comprises:
contending against at least the first AP device (220) for a time window for transmission of the low latency service by means of a Carrier Sense Multiple Access/Collision Avoidance, CSMA/CA, mechanism.

9. The second AP device (210) of claim 7, wherein performing the coordinated channel access with the first AP device (220) comprises:
after transmitting or receiving a predetermined number of data units of the low latency service, stopping transmission or reception of the low latency service, to allow contention channel access with at least the second AP device
, wherein for example,
for a downlink low latency service, a contention time window of the first AP device is less than a time window of the second AP device (210); or
for an uplink low latency service, a contention time window of the first AP device is greater than a time window of the second AP device.

10. The second AP device (210) of claim 7, wherein performing the coordinated channel access with the first AP device (220) comprises:
sending a Resource Unit, RU, allocation message to the first AP device (220), the RU allocation message indicating a frequency band allocated to the first AP device (220)
, wherein for example the RU allocation message comprises at least one of the following:
an identifier of an R-TWT associated with the RU;
an MAC address of the first access point; and
a value of the RU
, wherein for example performing the coordinated channel access with the first AP device comprises:
transmitting the low latency service of the terminal concurrently with at least the first AP device within the R-TWT SP, using a frequency band not overlapping with the frequency band of the first AP device.

11. The second AP device (210) of claim 7, wherein performing the coordinated channel access with the first AP device (220) comprises:
receiving from the first AP device a first RU notification message indicating a first frequency band to be used by the first AP device within the R-TWT SP;
sending a second RU notification message indicating a second frequency band to be used by the second AP device within the R-TWT SP; and
transmitting or receiving, concurrently with at least the first AP device, the low latency service of the terminal within the R-TWT SP, using the second frequency band.

12. The second AP device (210) of claim 7, wherein the second AP device (210) is higher than the first AP device (220) in hierarchy of the wireless mesh network
, wherein for example the second AP device (210) comprises a root AP of the wireless mesh network.

13. A method implemented by a first AP device (220), comprising:
sending a Restricted Target Wake Time (R-TWT) notification message to a second AP device (210) in a wireless mesh network, the R-TWT notification message at least indicating an R-TWT Service Period, SP, of a terminal having R-TWT membership with the first AP device; and
performing, within the R-TWT SP of the terminal, coordinated channel access with the second AP device for transmission of a low latency service of the terminal.

14. A method implemented by a second AP device (210), comprising:
receiving a Restricted Target Wake Time, R-TWT, notification message from a first AP device (220) in a wireless mesh network, the R-TWT notification message at least indicating an R-TWT Service Period, SP, of a terminal having R-TWT membership with the first AP device;
broadcasting (204), within the wireless mesh network, an R-TWT service request to other AP devices, the R-TWT service request at least indicating the R-TWT SP; and
performing (205), within the R-TWT SP of the terminal, coordinated channel access with the first AP device (210) for transmission of a low latency service of the terminal.

15. A device implemented at a first Access Point, AP, comprising:
a component for sending a Restricted Target Wake Time, R-TWT, notification message to a second AP device in a wireless mesh network, the R-TWT notification message at least indicating an R-TWT Service Period, SP, of a terminal having R-TWT membership with the first AP device; and
a component for performing, within the R-TWT SP of the terminal, coordinated channel access with the second AP device for transmission of a low latency service of the terminal.

16. A device implemented at a second Access Point, AP, comprising:
a component for receiving a Restricted Target Wake Time, R-TWT, notification message from a first AP device in a wireless mesh network, the R-TWT notification message at least indicating an R-TWT Service Period, SP, of a terminal having R-TWT membership with the first AP device;
a component for broadcasting, within the wireless mesh network, an R-TWT service request to other AP devices, the R-TWT service request at least indicating the R-TWT SP; and
a component for performing, within the R-TWT SP of the terminal, coordinated channel access with the first AP device for transmission of a low latency service of the terminal.

17. A non-transitory computer-readable medium comprising program instructions that cause, when executed by a device, the device to perform the method of claim 13 or 14.
